# EUROPÄISCHE PATENTSCHRIFT

(11) **EP 0 885 824 B1**
(45) Veröffentlichungstag und Bekanntmachung des Hinweises auf die Patenterteilung: **11.09.2002**
(21) Anmeldenummer: 98106072.6
(22) Anmeldetag: 02.04.1998
(51) Int. Cl.: B65H 1/06, B65H 31/22, B65H 31/08, B65H 31/26

(54) **Magazinstation**
Store station
Station d'emmagasinage

(30) Priorität: 20.06.1997 DE 19726237
(43) Veröffentlichungstag der Anmeldung: 23.12.1998
(73) Patentinhaber: Weidmüller Interface GmbH & Co., 32760 Detmold (DE)
(72) Erfinder: Blanke, Uwe, 32760 Detmold (DE); Möhlmann, Ralf, 32429 Minden (DE); Schröder, Volker, 32758 Detmold (DE)
(74) Vertreter: TER MEER STEINMEISTER & PARTNER GbR

(56) Entgegenhaltungen:
- EP-A- 0 550 758
- WO-A-97/33245
- DE-A- 2 326 282
- DE-A- 3 245 879
- DE-A- 3 607 642
- GB-A- 2 082 548
- US-A- 5 415 519
- PATENT ABSTRACTS OF JAPAN vol. 12, no. 437 (M-765) [3284], 17. November 1988 (1988-11-17) & JP 63 171760 A (OMRON TATEISI ELECTRONICS CO), 15. Juli 1988 (1988-07-15)
- PATENT ABSTRACTS OF JAPAN vol. 11, no. 215 (M-606) [2662], 11. Juli 1987 (1987-07-11) & JP 62 031628 A (NEC KANSAI LTD), 10. Februar 1987 (1987-02-10)
- PATENT ABSTRACTS OF JAPAN vol. 5, no. 147 (M-88) [819], 17. September 1981 (1981-09-17) & JP 56 078736 A (ISEKI NOKI K.K.), 27. Juni 1981 (1981-06-27)

## Beschreibung

Die Erfindung betrifft eine Magazinstation für im wesentlichen ebenes Gut gemäß dem Oberbegriff des Patentanspruchs 1.

Aus der DE 23 26 282 A ist bereits eine derartige Magazinstation für ebenes Gut bekannt, mit einem vertikal stehenden Magazinschacht zur Aufnahme eines Stapels des Guts, der auf eine erste Transporteinrichtung abnehmbar aufgesetzt ist, wobei die erste Transporteinrichtung zum Transport des Guts in Längsrichtung des Magazinschachts dient, und mit einer im Bodenbereich der ersten Transporteinrichtung angeordneten zweiten Transporteinrichtung. Zum Halten des ebenen Guts im Magazinschacht sind Haltenasen vorgesehen, die beim Transport des Magazinschachts ein Herausfallen des ebenen Guts aus dem Magazinschacht verhindern. Der Magazinschacht eignet sich daher allenfalls dazu, relativ dünnes und flexibles ebenes Gut abzugeben. Dass in den Magazinschacht von unten auch relativ dickes ebenes Gut eingeführt werden kann, ist nicht erwähnt. Dies wäre auch schon durch die steifen Haltenasen nicht möglich.

Aus der US 5,415,519 A ist eine weitere Magazinstation für ebenes Gut bekannt, nämlich zum Stapeln von Disketten. Diese Magazinstation weist einen vertikal stehenden Magazinschacht zur Aufnahme eines Stapels des Guts auf, der auf einer ersten Transporteinrichtung sitzt. Diese erste Transporteinrichtung dient zum Transport des Guts in Längsrichtung des Magazinschachts, wobei der Magazinschacht in seinem unteren Bereich in den Schacht einführbare Schieber trägt und die Magazinstation ferner eine im Bodenbereich der ersten Transporteinrichtung angeordnete zweite Transporteinrichtung zum Transport des Guts in einer senkrecht zur Längsrichtung des Magazinschachts liegenden Richtung aufweist. Die Schieber können allerdings nur über untenliegende Schrägkanten durch von unten in den Magazinschacht hineingeführte Disketten nach außen gedrückt werden. Es ist nicht erwähnt, dass die Schieber dann, wenn der Magazinschacht auf die erste Transporteinrichtung aufgesetzt worden ist, nach außen herausgezogen werden können. Insofern eignet sich dieser Magazinschacht nicht zum Entstapeln von in ihm vorhandenem Gut.

Der Erfindung liegt die Aufgabe zugrunde, eine Magazinstation zu schaffen, mit der sich insbesondere auch dickes ebenes Gut aus einem Magazin zu einer Bearbeitungsstation führen oder stapeln lässt, nachdem es durch die Bearbeitungsstation bearbeitet worden ist, wobei das ebene Gut in Form von Einzelelementen vorliegt.

Diese Aufgabe wird durch eine Magazinstation gemäß dem Anspruch 1 gelöst. Vorteilhafte Ausgestaltungen der Erfindung sind den abhängigen Ansprüchen 2-14 zu entnehmen.

Eine Magazinstation nach der Erfindung zeichnet sich dadurch aus, dass der Magazinschacht in seinem unteren Bereich in den Schacht einführbare Schieber trägt, die nach Aufsetzen des Magazinschachts auf die erste Transporteinrichtung von Hand nach außen herausziehbar sind, und dass durch die zweite Transporteinrichtung das Gut in einer senkrecht zur Längsrichtung des Magazinschachts liegenden Richtung transportierbar ist.

Durch die zwischen dem Magazinschacht und der zweiten Transporteinrichtung liegende erste Transporteinrichtung wird erreicht, daß sich das ebene Gut separat in sicherer Weise zur zweiten Transporteinrichtung führen oder von dieser abnehmen läßt, so daß ein staufreier Einzug zur Bearbeitungseinrichtung bzw. eine staufreie Ausgabe aus der Bearbeitungseinrichtung gewährleistet sind. Darüber hinaus kann die erste Transporteinrichtung auch Dickenänderungen des ebenen Guts tolerieren, so daß keine Um- bzw. Einstellung der Magazinstation auf Gut jeweils unterschiedlicher Dicke erforderlich ist.

Nach einer vorteilhaften Ausgestaltung der Erfindung weist die erste Transporteinrichtung an zwei im Abstand einander gegenüberliegenden Vertikalplatten jeweils zwei im Abstand voneinander liegende Horizontalreihen von Fangstiften auf, die ins Innere der ersten Transporteinrichtung ein- bzw. aus dieser ausfahrbar sind.

Mit Hilfe dieser Fangstifte erfolgt zunächst eine Vorvereinzelung des untersten Guts des im Magazinschacht liegenden Stapels, wodurch ein sicherer Transport dieses untersten Guts zur zweiten Transporteinrichtung ermöglichst wird. Das so vereinzelte Gut wird darüber hinaus bei Aufnahme durch die zweite Transporteinrichtung nicht mehr durch das Gewicht des im Magazinschacht verbleibenden Guts beaufschlagt, so daß auch ein sicherer Transport des Guts durch die zweite Transporteinrichtung gewährleistet ist.

Wie bereits eingangs erwähnt, kann das ebene Gut eine unterschiedliche Dicke aufweisen. Dies gilt z. B. im Falle von Markierungsmatten für die in ihnen vorhandenen Markierungselemente. Dagegen weisen die Rahmenlängsseiten der Markierungsmatten immer dieselbe Höhe auf, wobei der Abstand der Fangstifte in Vertikalrichtung gesehen, also in Richtung des Magazinschachts, der Höhe der Rahmenlängsseiten der Markierungsmatten entspricht. Andererseits weisen die Rahmenlängsseiten an ihren den Fangstiften gegenüberliegenden Außenseiten von unten kommende Ausnehmungen auf, die alle im selben Abstand unterhalb der Oberfläche der Rahmenlängsseite enden.

Weisen somit die Markierungselemente eine Dicke auf, die gleich oder kleiner der Höhe der Rahmenlängsseiten ist, so liegen die einzelnen Markierungsmatten mit ihren Rahmenlängsseiten immer aufeinander. Sind dagegen die Markierungselemente dicker als die Höhe der Rahmenlängsseiten, so liegen die im Stapel vorhandenen Markierungmatten mit ihren Markierungselementen aufeinander.

Greifen im zuerst genannten Fall die Fangstifte in die Markierungsmatten ein, so liegt auf den Fangstiften jeweils ein Abschnitt der Markierungsmatten auf. Werden die unteren Fangstifte zurückgezogen, fällt die unterste Markierungsmatte herunter. Werden sie wieder vorgeschoben und anschließend die oberen Fangstifte zurückgezogen, fällt der gesamte Stapel von Markierungsmatten runter, bis die unterste Markierungsmatte auf den unteren Fangstiften zu liegen kommt. Über die aufeinanderliegenden Rahmenlängsseiten sind die darüberliegenden Markierungsmatten so positioniert, daß die oberen Fangstifte wieder in die Ausnehmungen der nächstfolgenden Markierungsmatte eingefahren werden können.

Im zuletzt genannten Fall, bei dem die Markierungselemente dicker sind bzw. eine größere Höhe haben als die Rahmenlängsseiten der Markierungsmatte, greifen die unteren Fangstifte wiederum in die seitlichenAusnehmungen der Rahmenlängsseiten ein. Die darüberliegende Markierungsmatte stützt sich jetzt aber nicht auf den oberen Fangstiften ab, sondern auf der unteren Markierungmatte, und zwar über ihre Markierungselemente. Werden jetzt die unteren Fangstifte zurückgezogen, fällt die unterste Markierungsmatte nach unten, mit ihr aber auch der darüberliegende Stapel, und zwar so lange, bis die nächstfolgende Markierungsmatte auf den aufeinander zugefahrenen oberen Fangstiften zu liegen kommt. Nach Zurückfahren der oberen Fangstifte fällt dann der gesamte Stapel nach unten, bis die unterste Markierungsmatte wieder auf den unteren Fangstiften zu liegen kommt, usw.

Wichtig ist, daß die Höhe der Rahmenlängsseiten aller Markierungsmatten, auch wenn sie Markierungselemente unterschiedlicher Dicke bzw. Höhe aufweisen, immer dem Vertikalabstand der Fangstifte entspricht, und daß die seitlichen Ausnehmungen, in die die Fangstifte eingreifen, und die in Vertikalrichtung der Rahmenlängsseiten verlaufen, immer im selben Abstand unterhalb der Oberfläche der Markierungsmatten enden.

Nach einer noch weiteren Ausgestaltung der Erfindung sind an den Vertikalplatten der ersten Transporteinrichtung Antriebsvorrichtungen für die Fangstifte befestigt, die z. B. in Form von Elektromagneten vorliegen können. Dabei können die Fangstifte jeweils einer Horizontalreihe mit einem an der Vertikalplatte außenliegenden Steg fest verbunden sein, der seinerseits durch eine der Antriebsvorrichtungen antreibbar ist, wodurch eine kompakte Magazinstation erhalten wird.

Bei der erfindungsgemäßen Magazinstation liegt die zweite Transporteinrichtung in Vertikalrichtung gesehen im Abstand unterhalb der ersten Transporteinrichtung, wobei die zweite Transporteinrichtung vorzugsweise zwei im Abstand parallel zueinander verlaufende Transportriemen aufweist, die zweckmäßigerweise innen an den Vertikalplatten liegen. Diese Transportriemen nehmen dann das jeweils vereinzelte Gut auf, wobei die Längsseiten des Guts auf den Transportriemen zu liegen kommen. Im Falle der Markierungsmatten kommen diese mit ihren Rahmenlängsseiten parallel liegend auf den Transportriemen zu liegen. Für den Fall, daß im mittleren Bereich der Markierungsmatten die Markierungselemente dicker bzw. höher sein sollten als die Rahmenlängsseiten, befindet sich zwischen den Transportriemen eine entsprechend tiefe Ausnehmung im Boden der Transporteinrichtung.

Jeder der Transportriemen kann nach einer Weiterbildung der Erfindung mit nach außen abstehenden Nocken versehen sein, die synchron zueinander umlaufen und dazu dienen, das auf sie aufgelegte Gut mitzunehmen.

Nach einer sehr vorteilhaften anderen Ausgestaltung der Erfindung kann die erste Transporteinrichtung auch eine auf ihrem Boden liegende Hubplatte aufweisen, die in Vertikalrichtung verschiebbar ist. Dabei kann die Hubplatte über eine den Boden durchragende Antriebsstange mit einer Antriebseinrichtung gekoppelt sein, um die Hubplatte in Vertikalrichtung vor- und zurückbewegen zu können. Vorzugsweise kann dabei das freie Ende der Antriebsstange über einen Nocken verschoben werden, der seinerseits durch einen mit ihm verbundenen Elektromotor antreibbar ist.

Mit Hilfe einer so ausgebildeten Magazinstation läßt sich von einer Bearbeitungsstation kommendes ebenes Gut, das mit Hilfe der zweiten Transporteinrichtung in Richtung zur ersten Transporteinrichtung transportiert worden ist, wieder zurück in den Magazinschacht führen, und zwar von unten nach oben. Jedesmal dann, wenn das mittels der zweiten Transporteinrichtung transportierte Gut oberhalb der ersten Transporteinrichtung zu liegen kommt, wird letztere betätigt, um dem Stapel von ebenem Gut im Magazinschacht ein weiteres ebenes Gut von unten hinzuzufügen. Somit wird das Prinzip "first-in" - "first-out" realisiert.

In Weiterbildung der Erfindung trägt der Boden zwei im Abstand einander gegenüberliegende Vertikalplatten, zwischen denen die Hubplatte liegt. Dabei kann in jeder Vertikalplatte wenigstens ein plattenförmiges Element so gelagert sein, daß es aufgrund der Schwerkraft mit seiner oberen Kante aus der Ebene der Vertikalplatte nach innen herauskippt.

Die plattenförmigen Elemente dienen als sogenannte Stapelfalle. Wird ein ebenes Gut durch die Hubplatte nach oben transportiert, so drückt das ebene Gut die plattenförmigen Elemente auseinander und in die jeweiligen Vertikalplatten hinein. Nachdem das ebene Gut die oberen Kanten der plattenförmigen Elemente passiert hat, neigen diese aufgrund der Schwerkraft dazu, wieder aus den Vertikalplatten nach innen herauszukippen und kommen daher mit ihren oberen Kanten unterhalb des ebenen Guts zu liegen, um dieses abzustützen, wenn anschließend die Hubplatte wieder nach unten bewegt wird. Die nach innen gerichtete Kippbewegung der plattenförmigen Elemente wird dabei durch geeignete Anschläge begrenzt, so daß die Hubplatte problemlos wieder nach unten gezogen werden kann. Die Magazinierung des nächsten ebenen Guts erfolgt in derselben Weise, wobei das bereits im Magazinschacht vorhandene erste Gut dann lediglich durch das nachfolgende Gut angehoben wird.

Vorteilhaft bei dieser Art von Magazinstation ist, daß in sie ebenes Gut unterschiedlicher Dicke einlaufen kann, das anschließend nach oben geführt und zu einem Stapel im Magazinschacht zusammengestellt wird, ohne daß besondere Einstellvorgänge wegen der unterschiedlichen Dicken des Guts erforderlich wären.

Auch hier kann die zweite Transporteinrichtung zwei im Abstand parallel zueinander verlaufende Transportriemen aufweisen, von denen jeweils einer auf dem Boden zwischen Hubplatte und Vertikalplatte geführt ist. Wie bereits zuvor schon erwähnt, kann im Falle von Markierungsmatten die Dicke bzw. Höhe der Markierungselemente größer sein als die Höhe der Rahmenlängsseiten. Kommen die Rahmenlängsseiten auf den Transportriemen zu liegen, muß zwischen ihnen eine genügend große Vertiefung zur Aufnahme der Markierungselemente vorhanden sein, die die Rahmenlängseiten nach unten überragen. Zu diesem Zweck ist die Hubplatte in einer Vertiefung des Bodens gelagert und kommt mit ihrer Oberfläche unterhalb der Oberfläche des Bodens bzw. unter den auf dem Boden laufenden Transportriemen zu liegen.

Der Magazinschacht selbst weist in seinem unteren Bereich an gegenüberliegenden Wänden zwei in den Schacht einführbare und horizontal liegende Schieber auf, so daß sich beim Transport des Magazinschachts dieser an seinem unteren Ende verschließen läßt, um ein Herausfallen des in ihm gelagerten Guts zu vermeiden. Nach Aufsetzen des Magazinschachts auf die erste Transporteinrichtung werden dann die Schieber nach außen gezogen, so daß das im Magazinschacht gelagerte ebene Gut auf die oberen Fangstifte herauffällt.

Liegt dagegen im umgekehrten Fall das gesamte und mit Hilfe der Hubplatte angehobene ebene Gut innerhalb des Magazinschachts, so lassen sich wiederum die Schieber in den Magazinschacht einführen, um das ebene Gut in ihm zu halten, wenn er von der ersten Transporteinrichtung abgenommen wird.

Die Schieber befinden sich an denjenigen Seiten des Magazinschachts, die senkrecht zu den Vertikalplatten der ersten Transporteinrichtung stehen, nachdem der Magazinschacht auf die erste Transporteinrichtung aufgesetzt worden ist.

Die Erfindung wird nachfolgend unter Bezugnahme auf die Zeichnung im einzelnen erläutert. Es zeigen:
**Figur 1** einen Laserdrucker im Schnitt, mit dem die Magazinstationen eingangs- und ausgangsseitig kombiniert werden;
**Figur 2** eine Stirnansicht einer nachgiebig gelagerten Koronastation des Laserdruckers nach Figur 1;
**Figuren 3a bis 3d** unterschiedliche Matten von Markierungselementen sowie den Aufsetzvorgang der Matten auf Transportriemen des Laserdruckers nach Figur 1;
**Figur 4** eine Matte von Markierungselementen in perspektivischer Darstellung;
**Figur 5** eine schematisch dargestellte Seitenansicht einer Magazinstation zum Zuführen von Markierungsmatten zum Laserdrucker nach Figur 1;
**Figur 6 einen Schnitt durch die Magazinstation nach Figur 5 entlang der** Linie A - A';
**Figur 7** eine schematisch dargestellte Seitenansicht einer weiteren Magazinstation zur Aufnahme von bedruckten Markierungsmatten;
**Figur 8** einen Schnitt durch die Magazinstation nach Figur 7 entlang der Linie B - B';
**Figur 9** eine Seitenansicht eines Magazinschachts; und
**Figur 10** eine Draufsicht auf den Magazinschacht nach Figur 9.

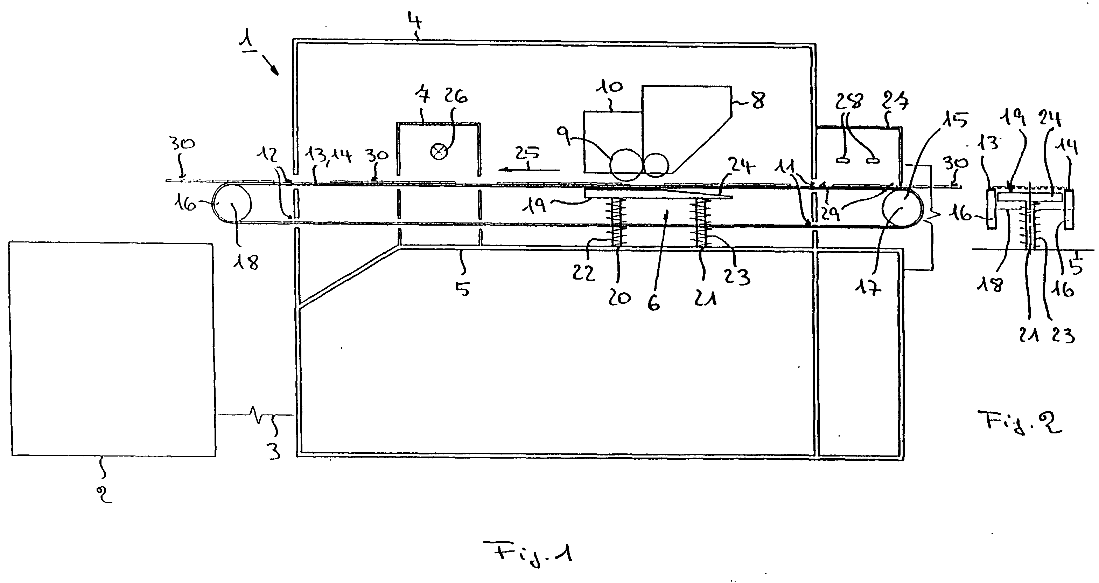

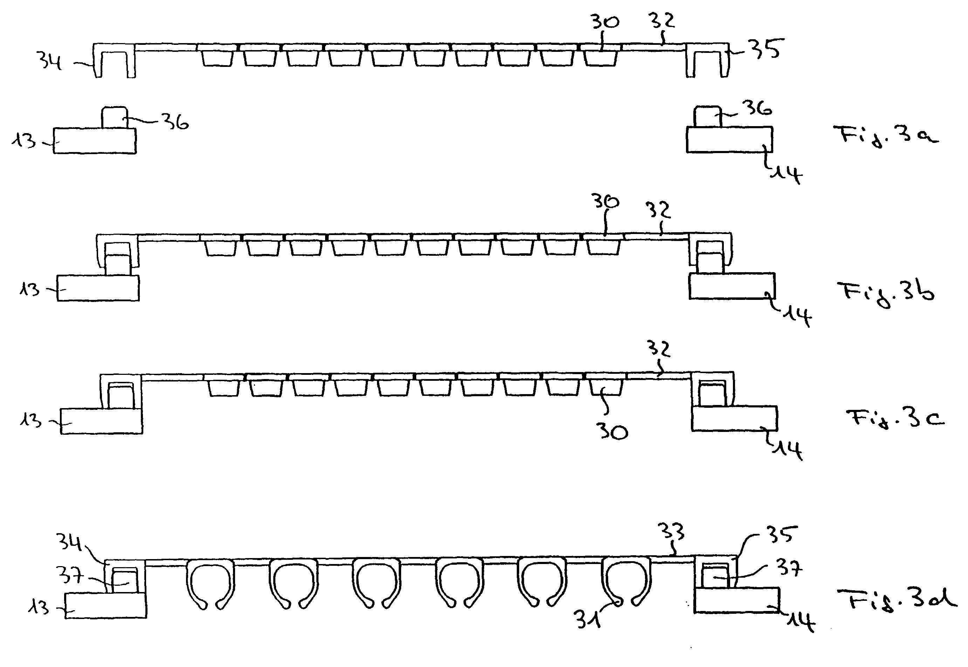

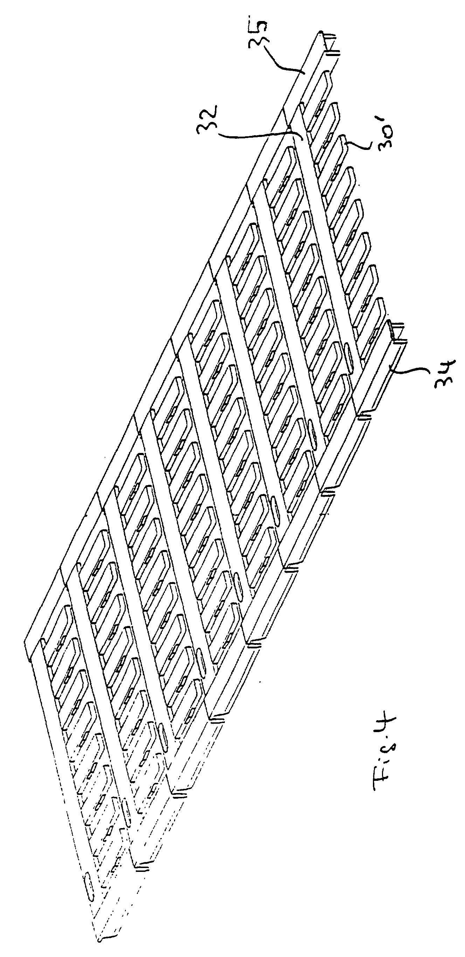

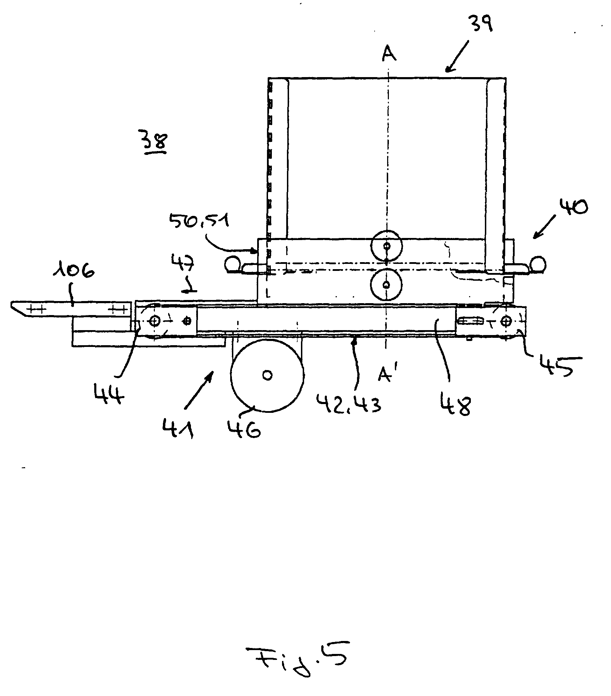

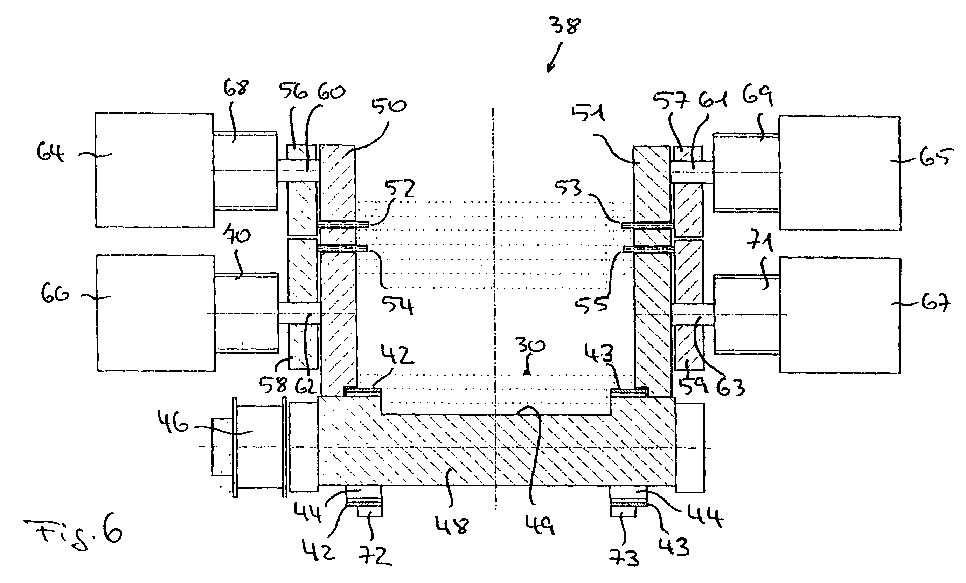

Die Figuren 1 und 2 zeigen den prinzipiellen Aufbau eines Laserdruckers.

Er trägt das Bezugszeichen 1. Der Laserdrucker 1 kann zu Ansteuerungszwecken mit einem Rechner 2 über eine Schnittstelle 3 verbunden sein, wie allgemein bekannt. Er ist ein- und ausgangsseitig mit Magazinstationen gekoppelt, wie noch erläutert wird.

Zum Laserdrucker 1 gehört ein Gehäuse 4, in dessen Inneren sich etwa auf halber Höhe eine horizontal angeordnete Trägerplatte 5 für weitere Elemente des Laserdruckers 1 befindet. Auf der Trägerplatte 5 sind eine Koronastation 6 und eine Fixierstation 7 befestigt. Oberhalb der Koronastation 6 sind eine Tonerstation 8, eine Bildtrommel 9, und eine Belichtungsstation 10 zur Belichtung der Bildtrommel 9 vorhanden. Zur Belichtung der Bildtrommel 9 dient ein nicht dargestellter Laser, der in der Belichtungsstation 10 untergebracht ist und datenmäßig vom Rechner 2 angesteuert wird.

Das Gehäuse 4 des Laserdruckers 1 weist ein Eingangstor 11 und einAusgangstor 12 u.a. für im Abstand nebeneinanderliegende Transportriemen 13, 14 auf, von denen jeweils einer um zwei Umlenkrollen 15, 16 herumgeführt ist, von denen eine antreibbar ist. Jeweils zwei dieser Umlenkrollen 15, 15 bzw. 16, 16 befinden sich im Abstand voneinander auf einer gemeinsamenAchse 17, 18. Die beiden Umlenkrollen 15 befinden sich im Abstand vor dem Eingangstor 11 außerhalb des Gehäuses 4 und sind auf einer geeigneten und nicht dargestellten Halterung am Gehäuse 4 über die Achse 17 montiert. Dagegen befinden sich die beiden Umlenkrollen 16 im Abstand hinter dem Ausgangstor 12 außerhalb des Gehäuses 4 und sind ebenfalls mittels einer nicht dargestellten Halterung über die Achse 18 am Gehäuse 4 montiert. Die Umlenkrollen 15, 15 bzw. 16, 16 liegen dabei so, daß die beiden Transportriemen 13, 14 horizontal durch das Gehäuse 4 hindurchbewegt werden, wobei sie einen solchen Abstand voneinander haben, daß sie zwischen sich die Koronastation 6 aufnehmen können.

Dies ist am besten in Figur 2 zu erkennen. Es handelt sich hier um einen Blick vom Eingangstor 11 in Richtung auf das Ausgangstor 12. Zu erkennen sind die beiden Umlenkrollen 16, 16 auf der Achse 18, um die herum die Transportriemen 13, 14 geführt sind. Der Abstand zwischen den Umlenkrollen 16, 16 ist dabei so groß, daß die Koronastation 6 zwischen den Transportriemen 13, 14 angeordnet werden kann.

Die Koronastation 6 selbst weist eine ebene Platte 19 auf, die etwa in Höhe der jeweils oben laufenden Transportriemen 13, 14 zu liegen kommt. Diese Platte 19 liegt horizontal und parallel zur Trägerplatte 5 und stützt sich auf dieser ab. Zur Abstützung der Platte 19 auf der Trägerplatte 5 sind zwei Parallelführungen 20, 21 vorgesehen, die z. B. in Form von Teleskopen ausgebildet sind. Um die Parallelführungen 20, 21 herum sind wendelartige Druckfedern 22, 23 angeordnet, die sich an der Trägerplatte 5 einerseits und an der unteren Fläche der ebenen Platte 19 andererseits abstützen und letztere in Richtung zur Bildtrommel drücken. Durch diese Parallelführungen 20, 21 und die zugehörigen Druckfedern 22, 23 wird die ebene Platte 19 nachgiebig auf der Trägerplatte 5 gelagert. Die Platte 19 liegt dabei mit ihrer oberen Fläche auch parallel zur Längsachse der Bildtrommel 9. Dabei weist die ebene Platte 19 an ihrer zum Eingangstor 1 1 gerichteten Stirnseite eine Auflaufschräge 24 auf, auf die zu bedruckendes Gut 30 auflaufen kann, wenn dieses mit Hilfe der Transportriemen 13, 14 in den Bereich zwischen Bildtrommel 9 und Koronastation 6 transportiert wird. Je nach Dicke des zu bedruckenden Guts 30 wird dabei die Platte 19 mehr oder weniger weit nach unten in Richtung zur Trägerplatte 5 gedrückt, wodurch sich automatisch der Spalt zwischen Bildtrommel 9 und der ebenen Platte 19 auf die Dicke des zu bedruckenden Guts 30 einstellt. Das zu bedruckende Gut 30 kann z. B. in Form von einzelnen Markierungsmatten vorliegen, die eine Vielzahl von Markierungselementen aufweist.

Wie die Figur 2 erkennen läßt, liegen die beiden Parallelführungen hintereinander in Transportrichtung des zu bedruckenden Guts 30 bzw. mittig zur ebenen Platte 19. Dabei schaut man in Figur 2 auf die Auflaufschräge 24 der ebenen Platte 19.

In Figur 1 ist die Transportrichtung des zu bedruckenden Guts 30 mit dem Pfeil 25 angedeutet. In dieser Richtung erstreckt sich die ebene Platte 19 der Koronastation 6 bis hinter die Bildtrommel 9, wobei die Auflaufschräge 24 kurz vor der Bildtrommel 9 endet. Tragen die Transportriemen 13, 14 kein zu bedruckendes Gut 30, so liegen Bildtrommel 9 und ebene Platte 19 in einem vorbestimmten Abstand zueinander oder berühren sich nur leicht. Läuft dagegen zu bedruckendes Gut 30 auf die Auflaufschräge 24 auf, wird die ebene Platte 19 schon zu diesem Zeitpunkt ein wenig in Richtung zur Trägerplatte 5 gedrückt und anschließend dann noch weiter, wenn das zu bedruckende Gut 30 in den Bereich zwischen Bildtrommel 9 und ebener Platte 19 einläuft.

Die Tonerstation 8, die Bildtrommel 9 und die Belichtungsstation 10 arbeiten in der bekannter Weise, und ebenso die Fixierstation 4, wie dies z. B. aus der DE 40 18 025 A1 bekannt ist. Die Fixierstation 7 weist dabei eine im Infraroten arbeitende Blitzlichtlampe 26 zur Fixierung des Tonerbildes auf, das mittels der Bildtrommel 9 auf das zu bedruckende Gut 30 aufgebracht worden ist. Dabei durchlaufen die Transportriemen 13, 14 auch die Fixierstation 7 und führen dabei das zu bedruckende Gut 30 durch diese hindurch.

Zur Übertragung des Tonerbildes von der Bildtrommel 9 auf das zu bedruckende Gut 30 befinden sich in der ebenen Platte 19 wenigstens 3 im Abstand parallel verlaufende Leiterbahnen, die der Bildtrommel 9 gegenüberliegen und parallel zu deren Längsachse verlaufen. Beispielsweise kann an die mittlere dieser Leiterbahnen eine Hochspannung angelegt werden, während an die beiden äußeren Leiterbahnen Erdpotential zu liegen kommt. Auf diese Weise wird ein hohes elektrisches Feld im Spaltbereich zwischen Bildtrommel 9 und Koronastation 6 erzeugt, das zur Übertragung der Tonerpartikel von der Bildtrommel 9 auf das zu bedruckende Gut 30 dient. Die genannten Leiterbahnen sind dabei in die Platten 19 eingebettet, die aus elektrisch isolierendem Material besteht, so daß diese Leiterbahnen nicht durch das über die Oberfläche der Platte 19 hinwegleitende zu bedruckende Gut 30 beschädigt werden können.

Das zu bedruckende Gut 30 wird im Bereich der Umlenkrollen 15, 15 auf die Transportriemen 13, 14 aufgelegt und im Bereich der Umlenkrollen 16, 16 wieder von den Transportriemen 13, 14 abgegeben bzw. einer weiteren Station zugeführt. Dabei kann zwischen den Umlenkrollen 15, 15 und dem Gehäuse 4 oder an anderer Stelle im Gehäuse in Transportrichtung vor der Tonerstation 8 liegend eine Heizstation 27 vorgesehen sein. Diese Heizstation 27 mit zugehöriger Ansteuerung dient dazu, die zu bedruckende Oberfläche des auf den Transportriemen 13, 14 liegenden zu bedruckende Gut 30 voraufzuheizen, um ein sauberes Druckbild zu erhalten. Die Voraufheizung erfolgt dabei mit Hilfe von z. B. zwei Blitzlampen 28, die Infrarotlichtblitze aussenden. Der Betrieb der Blitzlampen 28 kann durch Grenzschalter 29 gesteuert werden, die in Transportrichtung des zu bedruckenden Guts 30 innerhalb der Heizstation 27 hintereinanderliegend angeordnet sind. Diese Grenzschalter werden durch das zu bedruckende Gut beaufschlagt und lassen die Blitzlampen 28 solange arbeiten, solange sich noch zu bedruckende Gut 30 innerhalb der Heizstation 27 befindet.

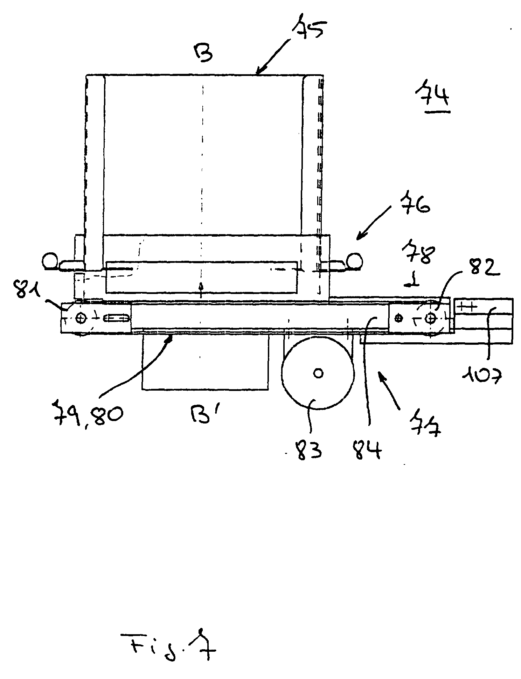

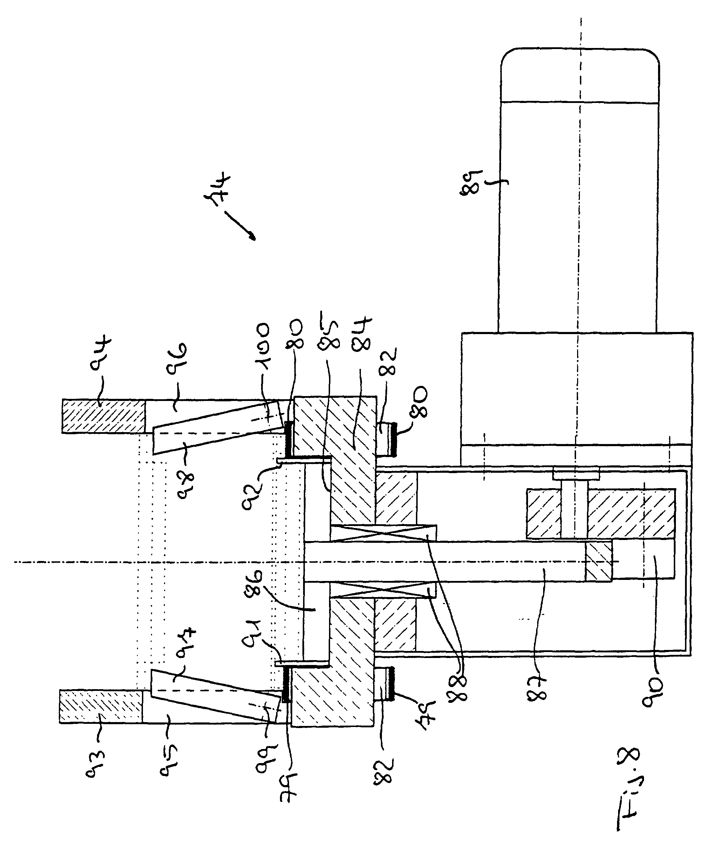

Die Figuren 3a bis 3d zeigen Schnittansichten durch die obenliegenden Bereiche der Transportriemen 13, 14. wobei die Schnitte senkrecht zur Längsrichtung der Transportriemen 13, 14 liegen.

Das zu bedruckende Gut trägt in den Figuren 3a bis 3c das Bezugszeichen 30 und in Figur 3d das Bezugszeichen 31. Es handelt sich hier um aus Kunststoff bestehende Markierungselemente, die an einem Steg 32, 33 befestigt sind, der ebenfalls aus Kunststoff bestehen kann. Dabei lassen sich die Markierungselemente 30, 31 vom jeweiligen Steg 32, 33 abbrechen. Mehrere Stege 32, 33 sind an ihren gegenüberliegenden Enden mit Rahmenlängsleisten 34, 35 verbunden, die hohlprofilartig ausgebildet und nach unten offen sind. Mit diesen nach unten offenen und hohlprofilartig ausgebildeten Längsleisten 34, 35 lassen sich die jeweiligen Matten auf Mitnehmer 36, 37 aufsetzen, die an den jeweiligen Transportriemen 13, 14 befestigt sind und von diesen nach oben bzw. außen abstehen. Der Aufsetzvorgang ist in den Figuren 3a bis 3c für den Rahmen 32, 34, 35 dargestellt. Der Rahmen 33, 34, 35 wird in gleicher Weise aufgesetzt und trägt lediglich andere Markierungselemente 31. Die zu bedruckenden Oberflächen der Markierungselemente 30, 31 liegen in den Figuren 3a bis 3d oben und kommen somit in Kontakt mit der Umfangsfläche der Bildtrommel 9.

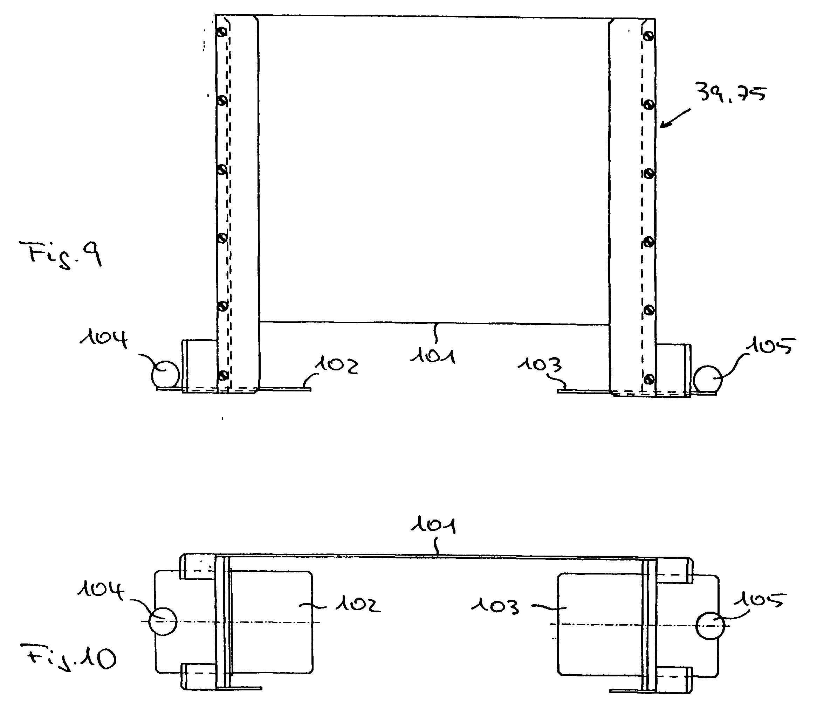

Die Figur 4 läßt eine Matte aus Markierungselementen 30' erkennen, die an einem Rahmen 32, 34, 35 befestigt sind, der ähnlich dem in den Figuren 3a bis 3c dargestellten Rahmen ausgebildet ist. Die Längsleisten 34, 35 der jeweils in den Figuren 3a bis 3c, 3d und 4 gezeigten Rahmen sind immer in der gleichen Weise ausgebildet und weisen dieselbe Höhe auf, so daß sie sich alle auf die Transportriemen 13, 14 aufsetzen lassen. Lediglich die zwischen den Längsleisten 34, 35 gehaltenen Markierungselemente 30, 31 bzw. 30', die jeweils an den Querstegen 32, 33 gehalten sind, können eine unterschiedliche Dicke bzw. Höhe aufweisen. Dennoch lassen sich sämtliche Markierungselemente mit dem Laserdrucker bedrucken, da dieser in Abhängigkeit von der Dicke der Markierungselemente die Position der ebenen Platte 19 der Koronastation 6 verschieben kann.

Eine eingangsseitig mit dem Laserdrucker nach Figur 1 zu verbindende Magazinstation für Markierungsmatten ist in schematischer Ansicht in Figur 5 gezeigt. Diese Magazinstation mit dem Bezugszeichen 38 besteht im wesentlichen aus drei Baugruppen, nämlich einem Magazinschacht 39, einer ersten Transporteinrichtung 40 zum Vertikaltransport von im Magazinschacht 39 vorhandenen Markierungsmatten und einer zweiten Transporteinrichtung 41 zum Transport der Markierungsmatten in einer senkrecht zur Längsrichtung des Magazinschachts 39 liegenden Richtung. Die Magazinstation 38 wird eingangsseitig mit dem Laserdrucker von Figur 1 gekoppelt, derart, daß von der zweiten Transporteinrichtung 41 transportierte Markierungsmatten 30 glatt auf die Transportriemen 13, 14 des Laserdruckers 1 überführt werden können. Dazu liegen die Transportriemen 13, 14 sowie die zweite Transporteinrichtung 41 auf derselben Höhe. Laserdrucker 1 und Magazinstation 38 können darüber hinaus auf einem gemeinsamen Träger montiert sein, um fest relativ zueinander positioniert werden zu können.

Wie die Figuren 5 und 6 gemeinsam erkennen lassen, weist die zweite Transporteinrichtung 41 zwei im Abstand parallel zueinander verlaufende Transportriemen 42, 43 auf, die jeweils um Umlenkrollen 44, 45 herumgeführt sind. Die Transportriemen 42, 43 sind mittels eines Motors 56 antreibbar, der z. ein Elektromotor ist. Es kann sich hier um einen Schrittmotor handeln. Er kann entweder die Transportriemen 42, 43 direkt antreiben oder aber eine der Umlenkrollen 44, 45 um die Transportriemen 42, 43 umlaufen lassen. Die Tranportrichtung ist in Figur 5 mit dem Pfeil 47 markiert.

Beide Transportriemen 42, 43 sind um eine Bodenplatte 48 herumgeführt und liegen in einem vorbestimmten Abstand parallel zueinander. In der oberen Seite der Bodenplatte 48 befindet sich in dieser zwischen den Transportriemen 42, 43 liegend eine Vertiefung 49. Diese Vertiefung 49 dient zur Aufnahme von relativ dicken Markierungselementen einer Markierungsmatte, die auf die Transportriemen 42, 43 aufgelegt worden ist. In Figur 6 ist eine derartige Markierungsmatte wiederum mit dem Bezugszeichen 30 versehen. Dabei erstreckt sich die Vertiefung 49 über die gesamte Längsrichtung der Bodenplatte 48, also parallel zur Bewegungsrichtung der Transportriemen 42, 43.

Auf der Bodenplatte 48 befinden sich im Abstand zueinander und parallel zueinanderliegend zwei Vertikalplatten 50, 51, die senkrecht zur Bodenplatte 48 stehen und parallel zur Transportrichtung der Transportriemen 42, 43 liegen. Sie befinden sich im Bereich der voneinander abgewandten Außenseiten der Transportriemen 42, 43, wobei letztere zum Teil noch in seitlichen Nuten der Vertikalwände 50, 51 verlaufen können. Quer zur Transportrichtung der Transportriemen 42, 43 befinden sich keine Vertikalplatten auf der Bodenplatte, so daß die Bodenplatte 48 zusammen mit den Vertikalplatten 50, 51 eine im wesentlichen U-förmige Struktur bildet.

In einer ersten Horizontalebene parallel zur Bodenplatte 48 und im Abstand zu dieser befinden sich in den Vertikalplatten 50, 51 zwei Reihen von Fangstiften 52, 53. Mehrere dieser Fangstifte 52, 53 befinden sich jeweils im Abstand entlang einer Geraden auf selber Höhe und parallel zur Bodenplatte 48. In einer dazu zweiten parallelen Horizontalebene etwas näher an der Bodenplatte 48 befinden sich ebenfalls zwei Reihen von im Abstand zueinander liegenden Fangstiften 54, 55 in den Vertikalplatten 50, 51. Auch diese Fangstifte 54, 55 liegen jeweils entlang einer Geraden parallel zur Bodenplatte 48, wobei die Anzahl der Fangstifte 54, 55 der Anzahl der Fangstifte 52, 53 entspricht. Die Abstände der Fangstifte in Horizontalrichtung sind untereinander gleich, wobei die Fangstifte in Vertikalrichtung miteinander fluchten.

Sämtliche Fangstifte 52 bis 55 durchlaufen Bohrungen in den Vertikalplatten 50, 51 und ragen in der Ruheposition ins Innere der U-förmigen Struktur hinein. An den Außenseiten der Vertikalplatten 50, 51 befinden sich vier Längsstege 56, 57, 58 und 59, mit denen jeweils die Fangstifte 52, 53, 54 und 55 einer jeweiligen Horizontalreihe fest verbunden sind. Sämtliche Fangstifte 52 sind also mit dem Längssteg 56 verbunden, usw. Dabei verlaufen die Längsstege 56 bis 59 parallel zur Bodenplatte 48. Die Längsstege 56 bis 59 sind jeweils auf einer Achse 60, 61, 62 und 63 gleitend verschiebbar, und zwar so weit, daß durch diese Verschiebung die jeweiligen Fangstifte 52 bis 55 aus der U-förmigen Struktur herausgezogen werden können bzw. vollständig in die Vertikalplatten 50, 51 einlaufen. Bei dieser Bewegung der Längsstege 56 bis 59 von den Vertikalplatten 50, 51 weg werden also die Fangstifte 52 bis 55 mitgenommen, allerdings nur so weit, daß dieselben nicht aus den Bohrungen in den Vertikalplatten 50, 51 herausgeführt werden. Die Bewegung der Längsstege 56 bis 59 von den Vertikalplatten 50, 51 weg auf den jeweiligen Achsen 60 bis 63 kann mit Hilfe von Elektromagneten 64, 65, 66 und 67 erfolgen, von denen jeweils einer auf einer der Achsen 60, 61. 62 und 63 angeordnet ist. Polschuhe 68, 69, 70 und 71 der jeweiligen Elektromagnete dienen als Anschlag für die Verschiebung der Längsstege 56 bis 59. Nach Ausschalten der Elektromagnete 64 bis 67 können die Längsstege 56 bis 59 durch nicht dargestellte Federn wieder zurück gegen die Außenseiten der Vertikalplatten 50, 51 geschossen werden, um somit schnell die Fangstifte 52 bis 55 wieder ins Innere der U-förmigen Struktur schieben zu können. Die zu diesem Zweck vorgesehenen Federeinrichtungen sind hier der Übersicht wegen nicht gezeigt.

Zur Ansteuerung der Elektromagnete 64 bis 67 dient eine ebenfalls nicht dargestellte Steuereinrichtung, mit deren Hilfe sich zuerst die Elektromagnete 64, 65 ansteuern lassen, um gleichzeitig die Reihen von Fangstiften 52, 53 aus der U-förmigen Struktur heraus und anschließend wieder hineinfahren zu können. Anschließend werden durch die Steuereinrichtung gleichzeitig die Elektromagnete 66 und 67 angesteuert, um die Reihen von Fangstiften 54, 55 gleichzeitig aus der U-förmigen Struktur heraus- und wieder hineinfahren zu können. Auf diese Weise erfolgt eine Vereinzelung des Stapels von im Magazinschacht 39 liegenden Markierungsmatten, wie noch beschrieben wird.

Mit jedem der Transportriemen 42, 43 ist darüber hinaus ein nach außen stehender Nocken 72, 73 verschweißt, der zum besseren Transport einer auf die Transportriemen 42, 43 aufgelegten Markierungmatte 30 dient. Beide Nocken 72, 73 laufen auf gleicher Höhe synchron um.

Die Figuren 7 und 8 zeigen den Aufbau einer weiteren Magazinstation 74. Diese weitere Magazinstation ist mit dem Ausgang des in Figur 1 gezeigten Laserdruckers koppelbar und nimmt die vom Laserdrucker 1 ausgegebenen bedruckten Markierungsmatten zunächst in horizontaler Transportrichtung auf, um die Markierungsmatten dann von unten in einen vertikal ausgerichteten Magazinschacht zu schieben und dort zu stapeln. Auch die weitere Magazinstation 74 kann auf dem bereits genannten Träger fest montiert sein, auf dem sich auch der Laserdrucker 1 und die Magazinstation 38 befinden.

Die weitere Magazinstation 74 besteht wiederum aus drei Hauptkomponenten, nämlich aus einem Magazinschacht 75, einer ersten Antriebseinrichtung 76 für die Vertikalbewegung der Markierungmatten und einer zweiten Antriebseinrichtung 77 für die Horizontalbewegung der Markierungsmatten.

Die zweite Antriebseinrichtung 77 für die Horizontalbewegung der Markierungsmatten nimmt von den Transportriemen 13, 14 gelieferten Markierungsmatten glatt auf, wobei die Transportrichtung der zweiten Antriebseinrichtung in Figur 7 mit dem Pfeil 78 markiert ist.

Die zweite Antriebseinrichtung 77 ist in gleicher Weise wie die zweite Antriebseinrichtung 41 von Figur 5 aufgebaut und weist zwei im Abstand parallel zueinander liegende Transportriemen 79, 80 auf, die um jeweilige Umlenkrollen 81, 82 herumgeführt sind. Mit Hilfe einer Elektromotors 83 lassen sich die Transportriemen 79, 80 entweder direkt antreiben oder indirekt über die Umlenkrollen 81 der 82.

Die Transportriemen 79, 80 umlaufen jeweils eine gemeinsame längliche Bodenplatte 84, wobei sie oberhalb und unterhalb der Bodenplatte geführt sind und die Längsrichtung der Bodenplatte in Umlaufrichtung derTransportrichtung liegt. Dabei kommen die Transportriemen 79, 80 auf der Oberfläche der Bodenplatte 84 zu liegen. Im Bereich zwischen den Transportriemen 79, 80 weist die obere Fläche der Bodenplatte 84 eine Vertiefung 85 auf, die zur Aufnahme einer Hubplatte 86 dient. Dabei erstreckt sich die Vertiefung 85 in Längsrichtung der Bodenplatte 84, und ebenso die Hubplatte 86. Die Vertiefung 85 ist so groß bzw. tief gewählt, daß die Oberfläche der Hubplatte 86 noch unterhalb der Oberfläche der Bodenplatte 84 zu liegen kommt, um in diesem ggf. dicker ausgebildete Markierungselemente aufnehmen zu können.

Die Hubplatte 86, die parallel zur Bodenplatte 84 in dieser liegt, kann in Vertikalrichtung angehoben werden, wozu die Hubplatte 86 mit einerAntriebsstange 87 fest verbunden ist, die die Bodenplatte 84 nach unten durchragt. Im Bereich zwischen Antriebsstange 87 und Bodenplatte 84 kann sich ein Gleitlager 88 befinden. Am unteren und freien Ende derAntriebsstange 87 befindet sich ein mittels eines Elektromotors 89 angetriebener Rollenhebel 90, der je nach Drehstellung für eine entsprechende Vertikalposition der Hubplatte 86 sorgt.

An beiden Längsseiten der Hubplatte 86 sind noch Schutzstege 91, 92 an den Seitenrändern der Vertiefung 85 befestigt, die etwas über die Oberfläche der Bodenplatte 84 hinausstehen, und gegen die von außen die Transportriemen 79, 80 anliegen. Die Schutzstege 91, 92 stehen auch über die Transportriemen 79, 80 hinaus, so daß letztere infolge der Vertikalbewegung der Hubplatte 86 nicht beschädigt werden können.

Im Bereich der noch freien äußeren Seiten der Transportriemen 79, 80 sind auf der Bodenplatte 84 Vertikalplatten 93, 94 angeordnet, die im Abstand parallel zueinander stehen und senkrecht zur Bodenplatte 84. Dabei erstrecken sich die Vertikalplatten 93, 94 parallel zur Transportrichtung der Transportriemen 79, 80. Die Transportriemen können dabei zum teil auch noch in bodenseitigen Nuten der Vertikalplatten 93, 94 verlaufen.

Die Vertikalplatten 93, 94 weisen jeweils eine Längsöffnung 95, 96 auf, die sich fast über die gesamte Länge der Vertikalplatten 93, 94 erstrecken. In diesen Längsöffnungen 95, 96 sind plattenförmige Elemente 97, 98 schwenkbar gelagert. Die Lagerung der plattenförmigen Elemente 97, 98 erfolgt in deren Bodenbereich um eine Drehachse 99, 100, die jeweils parallel zur Bewegungsrichtung der Transportriemen 79, 80 verläuft, also parallel zur Oberfläche der Bodenplatte 84. Die Drehachsen 99, 100 sind dabei an den Seiten der jeweiligen Längsöffnungen 95, 96 an den Vertikalplatten 93, 94 befestigt. Die Lagerung der plattenförmigen Elemente 97, 98 erfolgt dabei so, daß sie aufgrund der Schwerkraft um die Drehachsen 99, 100 ins Innere der aus Bodenplatte 84 und Vertikalwänden 93, 94 gebildeten U-förmigen Struktur kippen, und zwar etwa um den Bereich ihrer Dicke. Eine weitere Verkippung in dieser Richtung kann durch geeignete Anschläge vermieden werden. Hebt somit die Hubplatte 86 eine Markierungsmatte 30 von der Bodenplatte 84 in Vertikalrichtung nach oben ab, so werden durch die Markierungsmatte 30 die plattenförmigen Elemente 97, 98 in die Längsöffnungen 95, 96 zurückgedrückt, bis die Markierungsmatte 30 in einer Position oberhab der plattenförmigen Elemente 97, 98 zu liegen kommt. Jetzt kippen die plattenförmigen Elemente 97, 98 aus den Öffnungen 95, 96 nach innen heraus und kommen somit unterhalb der Markierungsmatte 30 zu liegen. Wird dann die Hubplatte 96 in Richtung zur Bodenplatte 84 zurückbewegt, nehmen die oberen Kanten der plattenförmigen Elemente 97, 98 die Markierungsmatte 30 auf und halten diese. In entsprechender Weise kann eine weitere Markierungsmatte 30 von unten nachgeschoben werden, wobei dann die bereits obenliegende ein Stück höher bewegt wird. Die zuletzt nachgeschobene Markierungsmatte 30 kommt dann immer auf den freien Längskanten der plattenförmigen Elemente 97, 98 zu liegen. Die bedruckten Markierungsmatten werden zur Bodenplatte 84 bzw. Hubplatte 86 in einer Richtung geführt, die in Figur 8 senkrecht zur Zeichenebene steht.

Die Figuren 9 und 10 zeigen jeweils eine Seitenansicht und eine Draufsicht eines Magazinschachts 39 bzw. 75. Er besteht aus einem im wesentlichen rechteckförmigen Gehäuse 101, das z. B. aus Kunststoff oder Blech gefertigt ist. Eine Längsseite des Gehäuses 101 kann dabei offen sein. Am unteren Ende des Gehäuses 101 sind an diesem zwei vertikal liegende Schieber 102 und 103 angebracht, die an den einander gegenüberliegenden kurzen Seiten des Gehäuses 101 liegen. Diese Schieber 102, 103 in Form von ebenen Platten können in das Gehäuse eingefahren und aus diesem wieder herausgefahren werden, wozu die jeweiligen Schieber mit Griffelementen 104, 105 versehen sind.

Ein derartiger Magazinschacht wird sowohl auf die erste Transporteinrichtung 40 der Magazinstation 38 aufgesetzt als auch auf die erste Transporteinrichtung 76 der Magazinstation 74. Dabei ist der Magazinschacht 39 mit unbedruckten Markierungsmatten befüllt, deren Ebenen jeweils senkrecht zu den Wänden des Gehäuses 101 liegen. Die unterste Markierungsmatte liegt auf den eingefahrenen Schiebern 102, 103 auf, die nach Aufsetzen auf die erste Transporteinrichtung 40 aus dem Gehäuse 101 herausgezogen werden, so daß die Markierungsmatten auf die oberen Fangstifte 52, 53 herauffallen.

Sofern der Magazinschacht 75 betroffen ist, sind die Schieber 104, 105 zunächst herausgezogen. Der Magazinschacht 75 wird dann von unten mit den bedruckten Markierungmatten befüllt, wobei nach Abschluß des Befüllungsprozesses die Schieber 104, 105 in das Gehäuse 101 einfahrbar sind und unter die letzte bedruckte Markierungsmatte greifen. Wird dann der Magazinschacht 75 abgenommen, ist für einen sicheren Halt der bedruckten Markierungsmatten im Schacht gesorgt. Die Verschiebungsrichtung der Schieber 102, 103 in Figur 8 verläuft ebenfalls senkrecht zur Zeichenebene.

Nachfolgend soll die Funktionsweise der Magazinstationen nochmals zusammengefaßt werden. Bei der Magazinstation 38 für die Vereinzelung wird in Abhängigkeit eines Steuersignals von einer Steuereinrichtung der Motor 46 eingeschaltet, so daß die Transportriemen 42, 43 umlaufen. Jetzt erfolgt die Vereinzelung durch die erste Transporteinrichtung 40, indem zunächst die ersten Fangstifte 52, 53 zurückgefahren werden, so daß die unterste Markierungmatte auf die zweiten Fangstifte 54, 55 fällt. Dann werden die ersten Fangstifte 52, 53 wieder eingefahren, wonach die zweiten Fangstifte 54, 55 zurückgefahren werden, so daß jetzt die unterste Markierungsmatte auf die Transportriemen 42, 43 fällt. Danach werden die Fangstifte 54, 55 wieder eingefahren. Dieses Auflegen der Markierungsmatte auf die Transportriemen 42, 43 läuft dann ab, wenn sich die Nocken 72, 73 in Transportrichtung gesehen gerade hinter der aufgesetzten Markierungsmatte befinden. Sie nehmen dann bei weiteren Transport der Transportriemen 42, 43 die Markierungsmatte mit und schieben diese weiter in Richtung Laserdrucker 1. Ist der Laserdrucker 1 frei, wird die Markierungsmatte auf die Transportriemen 13, 14 des Laserdruckers geschoben, und zwar mit Hilfe der Antriebsnocken 72, 73, wonach schließlich für den weiteren Transport die Nocken 36 bzw. 37 auf den Transportriemen 13, 14 verantwortlich sind. Kann die Markierungsmatte nicht zum Laserdrucker 1 weitergeleitet werden, weil dieser noch eine andere bedruckt, werden die Transportriemen 42, 43 abgeschaltet. Zwischen den Umlenkrollen 15 und 44 kann eine Art Gleittisch 106 vorhanden sein, um für einen glatten Transport der Markierungsmatten zu sorgen.

Die Magazinstation nach der Figur 7 ist für die Abstapelung der Markierungsmatten verantwortlich. Die Transportriemen 79, 80 werden hier nach einer vorbestimmten Zeit in Umlauf gesetzt, nachdem der Laserdrucker 1 eine Markierungsmatte eingezogen hat. Die bedruckte Markierungsmatte wird dann vom Laserdrucker 1 mit Hilfe der Transportriemen 13, 14 auf die Transportriemen 79, 80 geschoben, wobei zwischen den Umlenkrollen 16 und 82 wiederum ein Gleittisch 107 für einen glatten Transport der Markierungsmatten vorgesehen sein kann. Erreicht die übergebene Markierungsmatte das Ende der Hubplatte 86, werden die Transportriemen 79, 80 bzw. deren Antriebsmotor 83 abgeschaltet. Die Hubplatte hebt nun die Markierungsmatte über die Stapelfalle 97, 98 hinweg in den Magazinschacht 75 und kehrt anschließend in ihre Ausgangslage zurück.

Sämtliche oben beschriebenen Bewegungsabläufe können mit Hilfe von geeignet angebrachten Grenzschaltern bzw. Lichtschranken gesteuert werden.

## Patentansprüche

1. Magazinstation (38, 74) für im wesentlichen ebenes Gut (30), mit einem vertikal stehenden Magazinschacht (39, 75) zur Aufnahme eines Stapels des Guts (30), der auf eine erste Transporteinrichtung (40, 76) abnehmbar aufgesetzt ist, wobei die erste Transporteinrichtung (40, 76) zum Transport des Guts (30) in Längsrichtung des Magazinschachts (39, 75) dient, und mit einer im Bodenbereich der ersten Transporteinrichtung (40, 76) angeordneten zweiten Transporteinrichtung (41, 77), **dadurch gekennzeichnet, daß** der Magazinschacht (39, 75) in seinem unteren Bereich in den Schacht einführbare Schieber (102, 103) trägt, daß die eingeführten Schieber (102, 103) beim Transport des Magazinschachts (39, 75) das Herausfallen des im Magazinschacht (39, 75) gelagerten Guts (30) vermeiden, daß die Schieber (102, 103) nach Aufsetzen des Magazinschachts (39 75) auf die erste Transporteinrichtung (40, 76) von Hand nach außen herausziehbar sind, und dass durch die zweite Transporteinrichtung (41, 77) das Gut in einer senkrecht zur Längsrichtung des Magazinschachts (39, 75) liegenden Richtung transportierbar ist.

2. Magazinstation nach Anspruch 1, **dadurch gekennzeichnet, daß** die erste Transporteinrichtung (41) an zwei im Abstand einander gegenüberliegenden Vertikalplatten (50, 51) jeweils zwei im Abstand voneinander liegende Horizontalreihen von Fangstiften (52 bis 55) aufweist, die ins Innere der ersten Transporteinrichtung ein- bzw. aus dieser ausfahrbar sind.

3. Magazinstation nach Anspruch 2, **dadurch gekennzeichnet, daß** außen an den Vertikalplatten (50, 51) Antriebsvorrichtungen (64-67) für die Fangstifte (52 bis 55) befestigt sind.

4. Magazinstation nach Anspruch 3, **dadurch gekennzeichnet, daß** die Antriebsvorrichtungen (64 bis 67) Elektromagnete sind.

5. Magazinstation nach Anspruch 3 oder 4, **dadurch gekennzeichnet, daß** die Fangstifte (52 bis 55) jeweils einer Horizontalreihe mit einem an der Vertikalplatte (50, 51) außen liegenden Steg (56 bis 59) fest verbunden sind, der seinerseits durch eine der Antriebsvorrichtungen antreibbar ist.

6. Magazinstation nach einem der Ansprüche 1 bis 5, **dadurch gekennzeichnet, daß** die zweite Transporteinrichtung (41) in Vertikalrichtung gesehen im Abstand unterhalb der ersten Transporteinrichtung (40) angeordnet ist.

7. Magazinstation nach Anspruch 6, **dadurch gekennzeichnet, daß** die zweite Transporteinrichtung (41) zwei im Abstand parallel zueinander verlaufende Transportriemen (42, 43) aufweist.

8. Magazinstation nach Anspruch 7, **dadurch gekennzeichnet, daß** die Transportriemen (42, 43) innen an den Vertikalplatten (50, 51) liegen.

9. Magazinstation nach Anspruch 7 oder 8, **dadurch gekennzeichnet, daß** jeder der Transportriemen (42, 43) mit einem nach außen abstehenden Nocken (72, 73) versehen ist.

10. Magazinstation nach Anspruch 1, **dadurch gekennzeichnet, daß** die erste Transporteinrichtung (76) eine auf ihrem Boden (84) liegenden Hubplatte (86) aufweist, die in Vertikalrichtung verschiebbar ist.

11. Magazinstation nach Anspruch 10, **dadurch gekennzeichnet, daß** die Hubplatte (86) über eine den Boden (84) durchragende Antriebsstange (87) mit einer Antriebseinrichtung (89, 90) gekoppelt ist.

12. Magazinstation nach Anspruch 10 oder 11, **dadurch gekennzeichnet, daß** der Boden (84) zwei im Abstand einander gegenüberliegende Vertikalplatten (93, 94) trägt, zwischen denen die Hubplatte (86) liegt.

13. Magazinstation nach Anspruch 12, **dadurch gekennzeichnet, daß** in jeder Vertikalplatte (93, 94) wenigstens ein plattenförmiges Element (97, 98) so gelagert ist, daß es aufgrund der Schwerkraft mit seiner oberen Kante aus der Ebene der Vertikalplatte (93, 94) nach innen herauskippt.

14. , Magazinstation nach Anspruch 12 oder 13, **dadurch gekennzeichnet, daß** die zweite Transporteinrichtung (77) zwei im Abstand parallel zueinander verlaufende Transportriemen (79, 80) aufweist, von denen jeweils einer auf dem Boden (84) zwischen Hubplatte (86) und Vertikalplatte (93, 94) geführt ist.

## Claims

1. Magazine station (38, 74) for substantially flat goods (30), having a vertical magazine shaft (39, 75) to hold a stack of the goods (30), which is set up removably on a first transport device (40, 76), the first transport device (40, 76) serving to transport the goods (30) in the longitudinal direction of the magazine shaft (39, 75), and having a second transport device (41, 77) arranged in the bottom area of the first transport device (40, 76), **characterized in that** the magazine shaft (39, 75) bears sliders (102, 103) that can be inserted into the shaft in its lower region, **in that** the inserted slides (102, 103) prevent the goods (30) stored in the magazine shaft (39, 75) falling out during the transport of the magazine shaft (39, 75), **in that** the slides (102, 103) can be withdrawn outwards by hand after the magazine shaft (39, 75) has been set up on the first transport device (40, 76), and **in that** by means of the second transport device (41, 77), the goods can be transported in a direction lying at right angles to the longitudinal direction of the magazine shaft (39, 75).

2. Magazine station according to Claim 1, **characterized in that** the first transport device (41) has, on two vertical plates (50, 51) located opposite each other at a distance, in each case two horizontal rows of catching pins (52 to 55) located at a distance from one another, which can be moved into the interior of the first transport device and out of the latter.

3. Magazine station according to Claim 2, **characterized in that** drive devices (64-67) for the catching pins (52 to 55) are fixed to the outside of the vertical plates (50, 51).

4. Magazine station according to Claim 3, **characterized in that** the drive devices (64 to 67) are electromagnets.

5. Magazine station according to Claim 3 or 4, **characterized in that** the catching pins (52 to 55) of a horizontal row in each case are firmly connected to a web (56 to 59) located on the outside of the vertical plate (50, 51), it being possible for the said web in turn to be driven by one of the drive devices.

6. Magazine station according to one of Claims 1 to 5, **characterized in that** the second transport device (41), as viewed in the vertical direction, is arranged at a distance underneath the first transport device (40).

7. Magazine station according to Claim 6, **characterized in that** the second transport device (41) has two transport belts (42, 43) running parallel at a distance from each other.

8. Magazine station according to Claim 7, **characterized in that** the transport belts (42, 43) are located on the inside of the vertical plates (50, 51).

9. Magazine station according to Claim 7 or 8, **characterized in that** each of the transport belts (42, 43) is provided with a cam (72, 73) projecting outwards.

10. Magazine station according to Claim 1, **characterized in that** the first transport device (76) has a lifting plate (86) which is located on its bottom (84) and can be displaced in the vertical direction.

11. Magazine station according to Claim 10, **characterized in that** the lifting plate (86) is coupled to a drive device (89, 90) via a drive rod (87) that projects through the bottom (84).

12. Magazine station according to Claim 10 or 11, **characterized in that** the bottom (84) bears two vertical plates (93, 94) located opposite each other at a distance, between which the lifting plate (86) is located.

13. Magazine station according to Claim 12, **characterized in that** in each vertical plate (93, 94) at least one plate-like element (97, 98) is mounted in such a way that its upper edge tilts out inwards from the plane of the vertical plate (93, 94) because of the force of gravity.

14. Magazine station according to Claim 12 or 13, **characterized in that** the second transport device (77) has two transport belts (79, 80) running parallel to each other at a distance, each of which is guided on the bottom (84) between lifting plate (86) and vertical plate (93, 94).

## Revendications

1. Station d'emmagasinage (38, 74) pour un produit (30) sensiblement plan, avec un puits formant magasin (39, 75), placé verticalement, pour recevoir une pile de produits (30) posée sur un premier organe de transport (40, 76), d'une façon permettant un prélèvement, le premier organe de transport (40, 76) servant au transport du produit (30) dans la direction longitudinale du puits formant magasin (39, 75), et avec un deuxième organe de transport (41, 77) disposé dans la zone de fond du premier organe de transport (40, 76), **caractérisée en ce que** le puits formant magasin (39, 75) porte dans sa zone inférieure des coulisseaux (102, 103) pouvant être introduits dans le puits, **en ce que**, lors du transport du puits formant magasin (39, 75), les coulisseaux (102, 103) introduits évitent la chute du produit (30) stocké dans le puits formant magasin (39, 75), **en ce que**, après pose du puits formant magasin (39, 75) sur le premier organe de transport (40, 76), les coulisseaux (102, 103) sont susceptibles d'être extraits à la main vers l'extérieur, et **en ce que**, au moyen du deuxième organe de transport (41, 77), le produit est susceptible d'être transporté dans une direction perpendiculaire à la direction longitudinale du puits formant magasin (39, 75).

2. Station d'emmagasinage selon la revendication 1, **caractérisée en ce que** le premier organe de transport (41) présente, sur chacune de deux plaques verticales (50, 51) placées à l'opposé à distance l'une de l'autre, deux rangées horizontales, placées à distance l'une de l'autre, de tiges de saisie (52 à 55), qui peuvent être introduites à l'intérieur du premier dispositif de transport et en être sorties.

3. Station d'emmagasinage, selon la revendication 2, **caractérisée en ce que** les tiges de saisie (52 à 55) sont fixées extérieurement sur les plaques verticales (50, 51) d'organes d'entraînement (64 à 67).

4. Station d'emmagasinage selon la revendication 3, **caractérisée en ce que** les dispositifs d'entraînement (64 à 67) sont des électro-aimants.

5. Station d'emmagasinage selon la revendication 3 ou 4, **caractérisée en ce que** chacune des tiges de saisie (52 à 55), d'une rangée horizontale, est reliée rigidement à une barrette (56 à 59) qui est placée extérieurement sur la plaque verticale (50, 51), et qui est susceptible d'être entraînée de son côté par l'un des organes d'entraînement.

6. Station d'emmagasinage, selon une des revendications 1 à 5, **caractérisée en ce que** le deuxième organe de transport (41) est disposé à distance au-dessous du premier organe de transport (40), en observant en direction verticale.

7. Station d'emmagasinage selon la revendication 6, **caractérisée en ce que** le deuxième organe de transport (41) comporte deux courroies de transport (42, 43) s'étendant à distance, parallèlement l'une à l'autre.

8. Station d'emmagasinage selon la revendication 7, **caractérisée en ce que** les courroies de transport (42, 43) sont situées intérieurement sur les plaques verticales (50, 51).

9. Station d'emmagasinage selon la revendication 7 ou 8, **caractérisée en ce que** chacune des courroies de transport (42, 43) est munie d'une came (72, 73) faisant saillie vers l'extérieur.

10. Station d'emmagasinage selon la revendication 1, **caractérisée en ce que** le premier dispositif de transport (76) présente une plaque de levage (86) placée sur son fond (84), plaque qui est déplaçable en direction verticale.

11. Station d'emmagasinage selon la revendication 10, **caractérisée en ce que** la plaque de levage (86) est couplée à un organe d'entraînement (89, 90), par une tige d'entraînement (87) traversant le fond (84).

12. Station d'emmagasinage selon la revendication 10 ou 11, **caractérisée en ce que** le fond (84) porte deux plaques verticales (93, 94), opposées et placées à distance l'une de l'autre et entre lesquelles est située la plaque de levage (86).

13. Station d'emmagasinage selon la revendication 12, **caractérisée en ce que** dans chaque plaque verticale (93, 94) est monté au moins un élément (97, 98) en forme de plaque, de sorte qu'il bascule vers l'intérieur hors du plan de la plaque verticale (93, 94), par son arête supérieure, du fait de la force de la gravité.

14. Station d'emmagasinage selon la revendication 12 ou 13, **caractérisée en ce que** le deuxième dispositif de transport (77) comporte deux courroies de transport (79, 80) s'étendant parallèlement et à distance l'une de l'autre et dont chacune est guidée sur le fond (84), entre la plaque de levage (86) et la plaque verticale (93, 94).
